(19)

**Europäisches Patentamt**
**European Patent Office**
**Office européen des brevets**

(11)  **EP 2 189 751 A1**

(12)  **EUROPEAN PATENT APPLICATION**

(43) Date of publication:
**26.05.2010 Bulletin 2010/21**

(51) Int Cl.:
*G01B 9/02* (2006.01)      *G01B 9/06* (2006.01)
*G05B 11/01* (2006.01)      *H03L 7/08* (2006.01)

(21) Application number: **08169727.8**

(22) Date of filing: **21.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **EUROPEAN SPACE AGENCY**
**75738 Paris Cédex 15 (FR)**

(72) Inventor: **den Hartog, Roland H.**
**3584 CA UTRECHT (NL)**

(74) Representative: **MERH-IP**
**Matias Erny Reichl Hoffmann**
**Paul-Heyse-Strasse 29**
**80336 München (DE)**

Remarks:
Amended claims in accordance with Rule 137(2) EPC.

(54)  **Method and apparatus for the elimination of low-frequency drifts of the set-point in control systems**

(57)    The invention relates to a method for eliminating low-frequency drifts of the set-point in a control system (200) for a system containing at least three signal channels (201), where said signal channels (201) can be permutated among themselves with respect to at least one control-loop sensor, said control system (200) controls differential properties of the beams in said channels (201), said method including the steps of determining the state of the beam in each channel of at least one pair of channels at a time by use of at least one sensor (212), comparing the determined state of the beams in each channel of the at least one pair of channels relative of each other and determining a first correction value run-

ning a control algorithm to achieve a desired set-point, the desired set-point being defined by the desired values for the differential properties between the beams in said pair of channels, and correcting the state for the beams in each channel of the at least one pair of channels to the desired set-point based on the determined first correction value. In order to eliminate low-frequency drifts of the set-point in a control system (200), it is proposed that the method further comprises means for self-calibrating the set-point of the control system to correct low-frequency drifts in the set-point. Moreover, the invention relates to an apparatus (200) implementing and employing the method according to this invention.

FIG 2

EP 2 189 751 A1

**Description**

1. Field of the Invention

The invention relates to a method for eliminating low-frequency drifts of the set-point in control systems for systems containing at least three signal channels, which can be permutated among themselves with respect to at least one control-loop sensor, where the control system controls differential properties of said channels. Moreover, the invention relates to an apparatus implementing and employing the method according to this invention.

2. Background of the Invention

When one or more output variables of a system need to follow a certain reference, i.e. a desired output, over time, a control system that applies a control algorithm to a measured variable against a set-point is a conventional technique to manipulate the inputs to a system to obtain the desired effect on the output of the system. A conventional closed-loop control system uses feedback to control states of a dynamical system, in which the input signal have an effect on the system outputs, which is measured with sensors and processed by a controller; the result (the control signal) is used by an actuator to adjust an input to the process, closing the loop.

For example high precision interferometry systems require the combination of optical beams with extremely small differences in differential optical properties: optical path length, intensity and polarization state. Feedback control-loop systems are the proven means to realize this stability by continuously minimizing measured differences in optical properties. In a large majority of control-loop applications, the stability of the set-point is not an issue. However, high levels of required stability and longer operating time-scales raise the problem of set-point stability and calibration: who is controlling the controller?

For high-precision interferometry, in particular nulling interferometry, that require integration times ranging from days to up to weeks, the requirements for detection and spectroscopy of earth-like exoplanets, and the associated problems have been detailed by O.P. Lay (Systematic errors in nulling interferometers, Applied Optics, Vol. 43, No. 33, pp. 6100-6123, 2004) and B. Chazelas et al. (Instrumental stability requirements for exoplanet detection with a nulling interferometer: variability noise as a central issue, Applied Optics, Viol. 45, No. 5, 984-992, 2006) in the context of the Darwin / TPF mission (European Space Agency / NASA programs designed to directly detect Earth-like planets orbiting nearby stars, and search for evidence of life on these planets) These studies indicate that the levels to which the optical path and intensity must be equalized are below 1 nm rms and 0.1% rms respectively. Failing to keep the optical path differences, intensities or polarization states of the beams equalized to these high levels of accuracy will result in a significant compromise of the signal-to-noise ratio of the reconstructed planetary signal. In order to bring and maintain the optical beams in the required equalized state and combine them, closed-loop negative feedback control systems are applied. These control loops use dedicated optoelectronic sensors to assess the state in a pair of beams, a control algorithm to compare these states relative to each other, and actuators to correct the state for each beam to the desired set-point (e.g. zero differences in optical path length, intensity, or polarization between the beams). The accuracy that can be achieved by a well-designed control loop is limited by three factors: the photon noise of the sensor, the opto-mechanical noise of the actuator and the stability of the set-point. The sensors of the control loops are fed with light in each of the beams and the signals measured by different detectors are read out electronically, digitized and fed into a computer system, running an algorithm which compares the measured states of the beams, and determines updated settings for the upstream actuator in order to minimize the differences between the states of the beams.

For example, in an Optical Path Difference (OPD) control loop a pair of beams is split into four sub-beam pairs which are combined with resp. 0, $1/2\pi$, $\pi$ and $3/2\pi$ phase difference onto four detectors, A, B, C and D. These phase differences are realized with optical components such as $\lambda/4$ plates. The phase difference between the two beams is derived from the intensities $I_A,..., I_D$ measured on each of the detectors as $\Delta\varphi = atan[(I_A - I_C)/(I_B - I_D)]$ (the so-called ABCD algorithm). This measured $\Delta\varphi$ is then translated into new mirror settings for the upstream delay lines, which are the actuators in this example. If the system is well designed, and if the detectors receive enough photons, then the errors on $\Delta\varphi$ are below the required accuracy, and the resolution and settling time of the actuators are such that the phase difference $\Delta\varphi$ can be compensated well within the cycling time of the loop.

The calibration of the set-point of this control loop is related to several hardware items. First there are the optics which create the phase differences between the four pairs of sub-beams. A thermal gradients across the optics may slightly offset the phase differences with respect to each other resulting in an offset $\varepsilon$ on the measurement of $\Delta\varphi$. Then there is the possibility of stray light, which may result in one of the detectors seeing more light than it should, again offsetting the measurement of $\Delta\varphi$. And finally there are the detectors and the read-out electronics, which may suffer from gain fluctuations due to thermal, electronic or cosmic-ray induced disturbances. Similar examples are possible for the pair-wise measurement of intensity or polarisation differences. As Chazelas et al, have demonstrated, current laboratory state-of-the-art nulling test set-ups show the onset of drifts on the low-frequency part of the power spectrum already over a period of a few 100 seconds. Avoidance of these drifts, in particular on the timescales involved in a spectroscopic integration, requires either costly investments in long-term thermal and electronic stability, additional stabilizing or shielding hardware and/or time-consuming re-calibration exercises. A method to eliminate these low frequency drifts of the set-point would allow for a reduction of the stability requirements to much shorter timescales.

For example, the most mature prior art for the Darwin is defined by the closed control loop system FINITO which is currently operated on ESO's VLTI (Gai et al., The VLTI Fringe Sensors: FINITO and PRIMA FSU, Proc, SPIE Vol. 5491, pp. 528 - 539, 2004). The Gai et al. paper describes in detail the sensor system and the ABCD algorithm used in the above example, in the case of a 3-beam optical interferometer, and how they are integrated with the actuators. An important difference with the DARWIN mission is that the control loop on the VLTI is not accurate enough to allow nulling interferometry, and is only concerned with stability at timescales of a few minutes to a few hours at most.

Therefore there is a need to solve the above mentioned issues by providing a more efficient reduction of undesired low-frequency drifts of the set-point in control systems for interferometry systems in particular and for system with control systems that require set-point stability, in general.

3. Summary of the Invention

In view of the above problems of the prior art, it is an object of the invention to provide a method and an apparatus being capable of eliminating low-frequency drifts in control systems, for a system containing at least three signal channels, where the control system controls differential properties of the channels.

The invention starts from a method for eliminating low-frequency drifts of the set-point in a control system for a system containing at least three signal channels, which can be permutated among themselves with respect to at least one control-loop sensor. It is proposed that said control system controls differential properties of said channels.

A control system as defined in this invention consists of a sensor system, a means for running a control algorithm, actuators and a system with signal channels (the plant) to be controlled. Such a control system applies a control algorithm to compare properties of the signal channels, which are measured with the sensor system, against a reference value, i.e. a set-point, to determine a correction value based on which an actuator adjusts the signals, thereby closing the loop. In this way, the control system controls differential properties of the signal channels of the system. For example, if the signal channels contain electromagnetic beams, the differential properties may be derived from the difference in optical path length, intensity and / or polarization of compared pairs of beams. Drifts of the set-point are undesired instabilities of the reference value of the control system to which the sensors are essentially blind. Low-frequency drifts as understood in this invention are drifts that must be slow enough so that set-point offsets are quasi-static during a full set of permutations of channel pairs with respect to the sensors. For example, in a practical system it takes the control system a certain time to acquire sufficient precision in the sensor read-out, to process the sensor read-outs into actuator settings, to have the actuators settle into the computed positions and to have this process repeated as many times as there are relevant pairs of channels to process. This defines the low-frequency domain of the said drifts of the set-point.

Moreover, the method may include the step of determining the state of the beam in each channel for at least one pair of channels at a time, by use of at least one sensor (system). Moreover, the method may include the step of comparing the determined state of the beam in each channel for at least one pair of channels at a time, relative of each other and determining a first correction value by running a control algorithm to achieve a desired set-point, the desired set-point being defined by desired values (for example, constant zero) for the difference of properties between the beams in said pair of channels. Moreover, the method may include the step of correcting the state of the beams in each channel for at least one pair of channels to the desired set-point based on the determined first correction value.

In order to achieve the above-mentioned object of eliminating low-frequency drifts of the set-point, it is further proposed that the method comprises the means for self-calibrating the set-point of the control system to correct low-frequency drifts in the set-point.

According to the prior art, such a self-calibrating mechanism is not available in conventional control loops for systems containing at least three signal channels (which can be permutated among themselves with respect to at least one control-loop sensor and where the control system controls differential properties of the beams in these channels). Such steps are therefore especially advantageous as with this approach it will be possible to overcome the problem of set-point instability and to ensure an efficient calibration of such a system. The invention would provide a system with a built-in redundancy that allows the immediate detection of any misalignments. It is further advantageous that such an elimination of set-point drifts would allow for a reduction of the stability requirements and therefore also greatly reduce the need for costly high-precision components and constructional measures of an apparatus containing such a control system, because the only conventional way to prevent set-point drift of the control loop would be to use costly measures to thermally and mechanically stabilize the sensor optics and read-out electronics. It is further advantageous that such a control system would enable more precise and accurate output signals unaffected by set-point drift inaccuracies.

A further aspect of the invention relates to a method where the self-calibration of the set-point comprises the step of permuting the channels so that beams from different combinations of channels are guided to the same sensor (system). It is proposed that the method comprises the step of permuting a set of at least three electromagnetic beams by means of an optical field rotator whereby the field rotator is stepping through a series of pre-set angles or states in such a manner that different combinations of beam pairs are delivered to the same sensor. Moreover, the method may include the step of storing in a register or memory unit the measurements of the differential properties of each beam pair for at least as many times as there are different permutated beam combinations sent to the same sensor, and determining for each beam and each property, from measurements made by the same sensor, the corrective value of the property to be applied via the actuator, which may be located either upstream or downstream with respect to the optical field rotator. Moreover, the method may include the step of reading out subsequently stored measurements of one property in one beam made by the same sensor in the process of establishing a second correction value for removing the effect of low-frequency drift of the set-point. Moreover, the method may further include the step of correcting the state of the beam in each channel by readjustment of the actuator, to establish the desired set-point based on the determined first and second correction values. Moreover, the method may further include the step of synchronizing the step of permutation of the electromagnetic beams, with the step of storing of the measurements and the step of reading out subsequent measurements made with one sensor and determining the second correction value.

In order to achieve a good correction value for the set-point drift, it is proposed that in the step of determining a second correction value, the correction algorithm is based on the principle of phase-closure. The principle of phase-closure is a well known approach in interferometry for the elimination of phase distortions. It is understood in this context that the principle of phase-closure is generalized to a principle of zero sum of differential properties. In particular, if one sensor (system) measures the differential property for a pair of beams coining from channel A and B: $\Delta P_{AB} = P_B - P_A$ and subsequently measures the differential properties for following beam pairs: $\Delta P_{BC}$, $\Delta P_{CD}$, ..., $\Delta P_{XA}$, such that each channel is involved in two different beam pairs and such that the sign of the measured property P for each channel in the two differential measurements is opposite, then the sum $\Delta P_{AB} + \Delta P_{BC} + ... + \Delta P_{XA}$ should be equal to zero. Implicit in this principle are the assumptions that the properties $P_A$, ..., $P_X$ are stable during the period these subsequent measurements are taking place, and that there is no set point offset.

If said method further comprises a calibration step before a measurement phase is started, wherein the optical path lengths of the beams for all the angular positions of the field rotator are determined and corrected to achieve the desired difference in optical path length, further advantages can be achieved. These advantages include the ability to re-establish the static optical alignments in different rotational positions of the field rotator and thereby reducing the problem of long-term effects due to mechanical wear. In order to overcome the above-mentioned problems of set-point instability in high-precision interferometers, it is further proposed that the invention is implemented in a interferometer.

A further aspect of the invention relates to an apparatus for eliminating low-frequency drifts of the set-point in a control system for a system containing at least three channels, which can be permutated among themselves with respect to at least one control-loop sensor, wherein said control system controls differential properties of said channels. It is proposed that said apparatus comprises a control system with at least one sensor to determine the state of the beams in each channel of at least one pair of channels at a time. Moreover, the apparatus may comprise a means for running a control algorithm for comparing the determined states of the beams in each channel for at least one pair of channels at a time, relative to each other and for determining a first correction value to achieve a desired set-point, the desired set-point being defined by desired values (e.g. constant zero) for the differential properties between the signals in said pair of channels. Moreover, the apparatus may comprise at least one actuator to correct the state for each channel to the desired set-point based on said first correction value. In order to achieve the above-mentioned object of eliminating low-frequency drifts of the set-point, it is further proposed that said apparatus further comprises a means for self-calibrating the set-point of the control system to correct low-frequency drifts in the set-point.

A further aspect of the invention relates to an apparatus that comprises means for permuting the channels so that signals from different combinations of at least one pair of channels are guided to the sensor (systems). In order to achieve the above mentioned advantages for a system wherein said beams for at least three input channels are electromagnetic beams, it is proposed that the apparatus may further comprise an optical field rotator to permute a set of incoming electromagnetic beams whereby the field rotator is stepping through a series of preset angles or states in such a manner that different combinations of beam pairs are delivered to the same sensor. The optical field rotator may be located either upstream or downstream of the actuator(s). Moreover, the apparatus may comprise a stepper motor or other driving mechanism to drive the optical field rotator through the different states. Moreover, the apparatus may comprise a register or memory unit to store measurements of the differential properties of each beam pair for at least as many times as there are different permutated beam combinations sent to the same sensor. Preferably, the register is a first-in-last-out register. Moreover, the apparatus may comprise a means for running a drift correction algorithm for reading the stored measurements and determining a second correction value wherein said second correction value removes the effect of low-frequency drifting of the set-point, before an updated setting of the actuator(s) is applied. Moreover, the apparatus may comprise a clock for synchronising an action of the stepper motor, the register, and the means for running a low-frequency drift correction algorithm.

According to a favourable embodiment of the invention, it is proposed that the optical assembly of the apparatus that contains the field rotator is fixed in position after rotation by means of kinematic coupling. Kinematic coupling describes fixtures designed to exactly constrain the part in question to a high degree of repeatability. Preferably, the apparatus may comprise piezo actuators and at least 3 sapphire and / or ruby balls to fix the said optical assembly in position by means of kinematic coupling. As a consequence, this embodiment ensures a high accuracy repeatability of the optical path and mechanical stability of the optical assembly that comprises an optical field rotator and a stepper motor.

According to another favourable embodiment, it is proposed that the apparatus is a control system for an optical interferometer.

4. Brief Description of the Drawings

Fig. 1 shows a schematic description of a control loop according to the prior art;

Fig. 2 shows a schematic description of a control loop system according to the invention;

Fig. 3 shows a schematic side view of an optical field rotator, shown as a K-Rotator made of three mirrors;

Fig. 4 shows a schematic example of beam permutation, as a function of field rotator orientation angle for the specific case of a system with three input channels;

Fig. 5a shows a flow diagram of the step-wise implementation of the exemplifying embodiment;

Fig. 5b shows a flow diagram of the step-wise implementation of the low-frequency drift correction algorithm and its initialization for the specific case of a system with three input channels ;

Fig. 6 shows a schematic graph of power spectral density of residual noise in the control loop as a function of frequency, and the associated optimal rotation frequency of the optical field rotator;

Fig. 7 shows a schematic description of the field rotator assembly, including the possible location of kinematic couplings, and reference systems;

Fig. 8 shows an exemplary numerical simulation of the suppression of the set-point drift, for different power spectral density profiles of the drift;

Fig 9a illustrates the effect of a vertical shift of a misaligned beam rotator on the optical path;

Figs 9b and 9c illustrate the impact of tilt angle $\beta$ of the optical x-axis of the assembly on the optical path length along the optical axis.

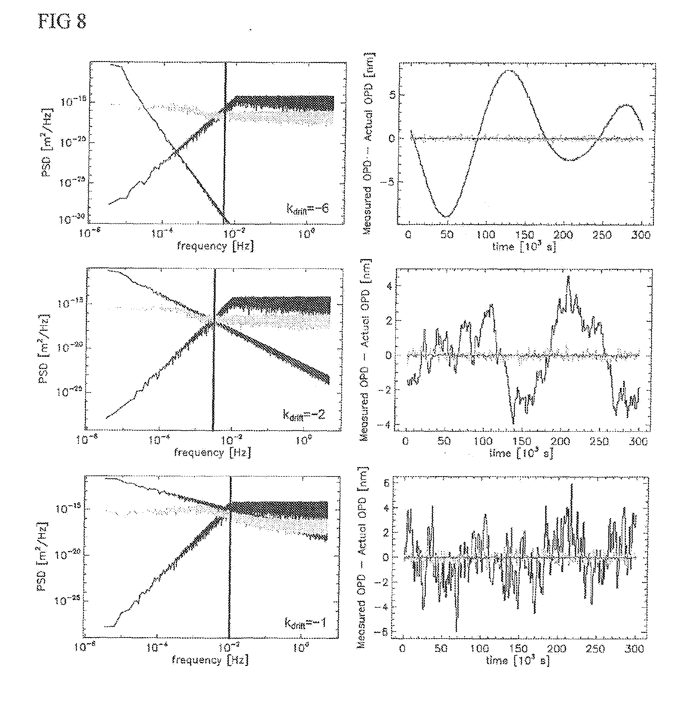

Table 1 summarizes the results of an exemplary numerical simulation of the suppression of the set-point drift, as illustrated in Fig. 8; and

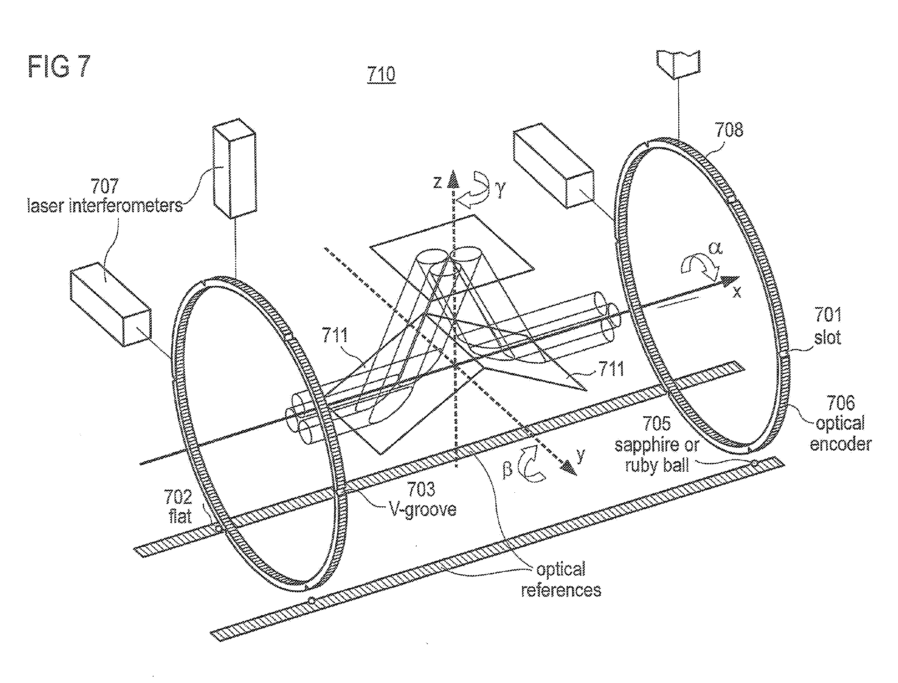

Table 2 summarizes the mechanical accuracy of the spatial positioning of the field rotator assembly, as illustrated in Fig. 7.

5. Detailed Description of the Embodiments

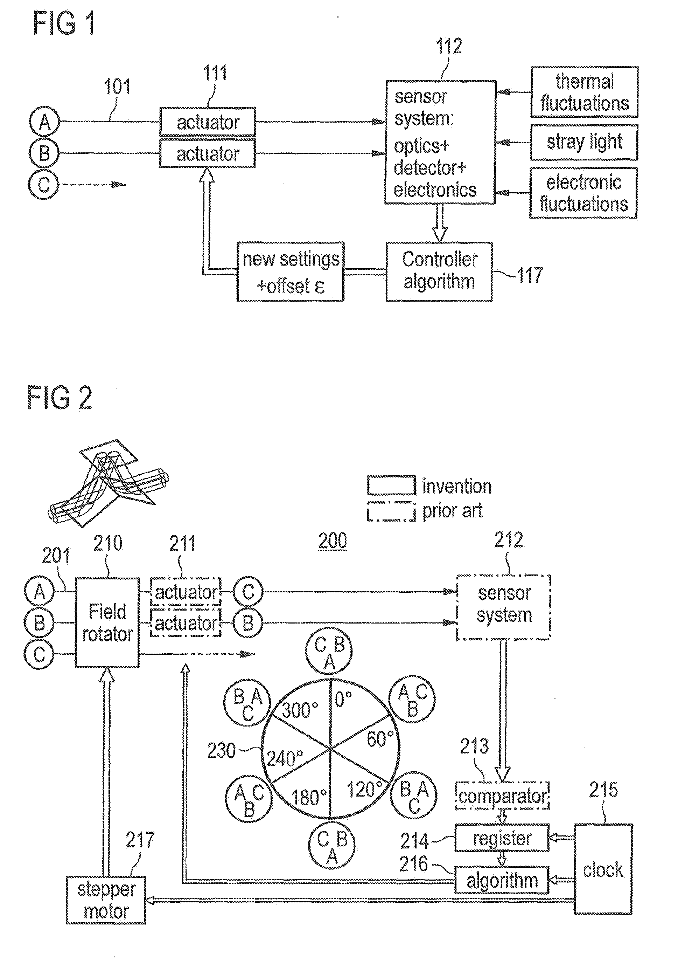

Fig. 2 shows a schematic description of a control system 200 for a nulling interferometer according to the invention The control loop system 200 includes a field rotator device 210, actuators 211, a sensor system 212, means for comparing differential optical properties of at least a pair of beams 213, a first-in-last-out register 214, a clock 215, means for running a control loop algorithm, in particular a low frequency drift correction algorithm 216, and a stepper motor 217.

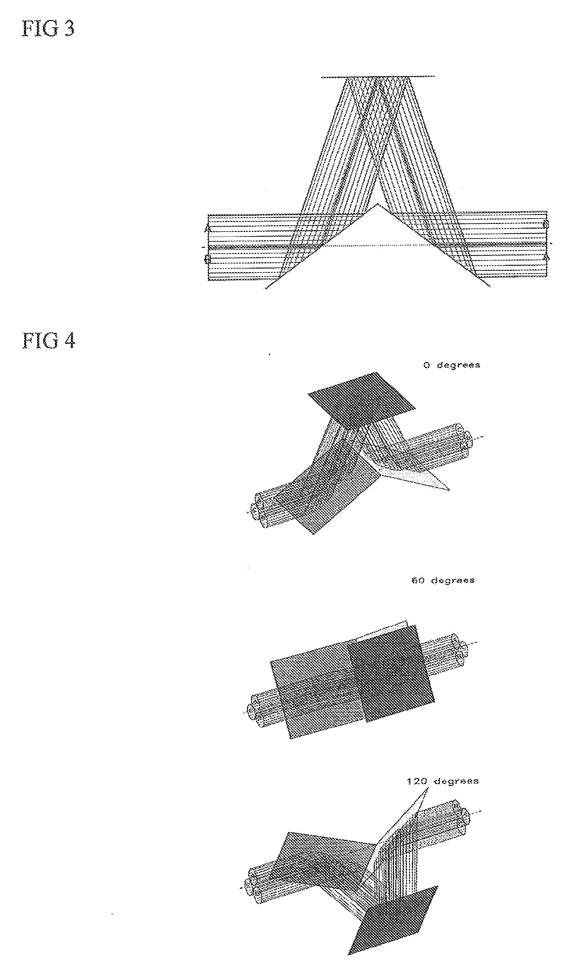

The field rotator device 210 permutes a set of incoming optical beams 201, when stepped through a series of pre-set orientation angles 230 when driven by a stepper motor 217. The different permutations of the optical beams lead to different pairs of beams sent to the sensors 212 of the control loop 200. This is illustrated in Figs. 2 and 4 whereby the field rotator 210 permutes the incoming beams 201 A, B and C so that the pair of beams A and B that enters the field rotator 210 is permutated to the pair of beams C and B after the field rotator 210. For each pre-determined set of angles 230, a permutated pair of beams 201 is sent to the sensor system 212. The illustrations here and below pertain specifically to a system with 3 channels. For systems with more channels the configuration of the beams, the rotation angles and the number of steps will be different.

Figs. 3 and 4 show a K-rotator made of three mirrors as an preferred embodiment of the field rotator device 210. An alternative form, such as a Dove prism will work equally well over a narrow wavelength range. Fig. 3 shows a schematic side view of a K-rotator, whereas in Fig. 4 a schematic example of beam permutation is shown, as a function of field rotator orientation angle 230.

Further, in Fig. 2, the sensor system 212 consisting of optical components, optical detectors and proximity electronics for detector read-out, is configured for detecting the at least one pair of incoming beams, measuring the detected beam properties, reading out electronically the sensors and digitizing the measurements. Preferably, the sensors 212 are thereby fed with a fraction of the light in each of the beams.

The control loop system 200 is provided with a means 213 for comparing differential optical properties 213 of at least one pair of beams that has been detected and measured at the sensor system 212. The register 214 is configured for storing measurements for at least as many times as there are different beam combinations sent to the control loop sensors 212. The means 216 is configured for running a low-frequency drift correction algorithm.

The clock 215 is being configured for synchronizing the actions of the stepper motor 217, the register 216 and the means for running a control loop algorithm, in particular the low-frequency drift correction algorithm 216.

In a preferred embodiment, a computer or a field-programmable gate-array (FPGA) will be configured to perform the functions of the register 214, the clock 215 and the algorithm means 216. Further, in a preferred embodiment, the means for running a low-frequency drift algorithm 216 may be added to the means for running the control loop algorithm 117 that is part of the prior art. Nevertheless, the action of the algorithm performing a low-frequency drift algorithm can be clearly distinguished from the normal control loop correction algorithm, because it removes the effect of the low-frequency drifting of the control loop set-point.

In order to illustrate the difference of a control loop system according to the invention and one according to the prior art, Fig. 1 shows a schematic description of a control loop according to the prior art.

The control loop system 100 includes actuators 111, a sensor system 112, and a means for running a control loop algorithm 117. Differential optical properties are assessed for pairs of beams 101 in the sensor system 112, consisting of optical components, optical detectors and proximity electronics for detector read-out. The detector read-outs are fed into an algorithm means 117 that computes the instantaneous differential property and the actuator 111 settings required to nullify the difference. The upstream located actuators 111 are brought into a new state, and the cycle starts again. The disadvantage of the prior art system is that the set-point calibration of the control loop 100 is embedded in the properties of the optoelectronic system, and may drift as result of e.g. thermal fluctuations and gradients across the optical system, stray light, electronic pick-up and transients. The prior art control loop has no means to correct such set-point drifts of the control loop in contrast to the control loop as shown in Fig. 2.

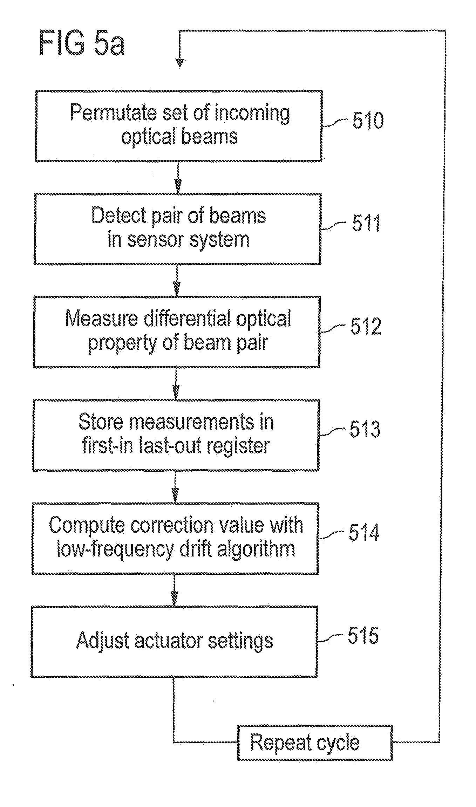

According to the invention, Fig. 5a shows a flow diagram of the step-wise implementation of the exemplifying control loop system shown in Fig 2. In step 510, the field rotator 210 permutes a set of incoming optical beams 201, when stepped through a series of pre-set orientation angles 230 when driven by a stepper motor 217. The different permutations of at least one pair of optical beams are then sent to the sensors 212 of a control loop and detected, measured and read out in step 511. The sensed pairs of beam properties are then compared to measure the differential optical property of the beam pair in step 512. The measurement is then stored in a first-in-last-out register 214 in step 513. This register stores measurements for at least as many times as there are different pairs of beam combinations sent to the control loop sensors. In step 514, a correction value required to nullify the measured difference for at least one pair of beams at a time for the low-frequency drift of the set-point is computed based on the stored measurements in the register 214 by a means 216 running a low-frequency drift algorithm. The correction value for at least one pair of beams at a time is sent to the respective actuators of the beams with which the actuator settings are adjusted in step 515 and then the cycle starts again.

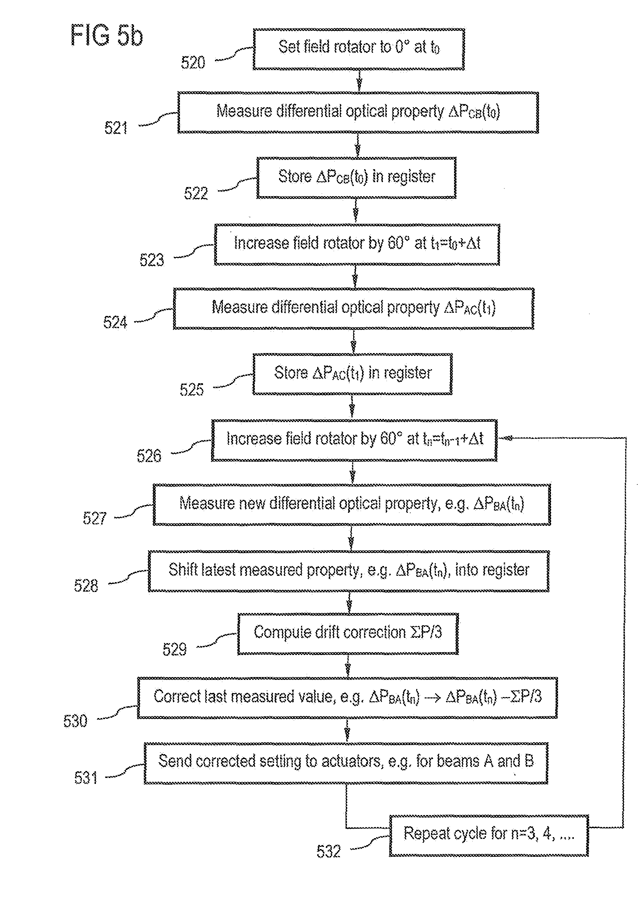

According to the invention, Fig. 5b shows in more detail a flow diagram of the step-wise implementation of the low-frequency drift correction algorithm. In step 520, at an initial state of the system, at a clock state $t_0$, the orientation angle of the field rotator is set to 0°. For simplicity the control loop is assumed to be fed with two beams at a time, and the system is assumed to contain three beams in total. More than two signals may be accepted simultaneously, but they are still combined and compared in a pair wise manner. In step 521, at the end of a first cycle step, one comparative measurement has been made on beam-pair CB of differential optical property $\Delta P_{CB}$, which may correspond to the difference in phase, intensity or polarization state of beams B and C. It is assumed that since the start of the observation, the sensor system has developed a drift such that the value for the differential property $\Delta P_{CB}$ is offset by an amount $\varepsilon$: $\Delta P_{CB}(t_0) = P_B(t_0) - P_C(t_0) + \varepsilon(t_0)$. This value is stored in the register in step 522.

In the second step of the rotation cycle, at clock state $t_1 = t_0 + \Delta t$, the field rotator orientation is moved to 60° in step 523, locked into position using the kinetic coupling, and a new set of measurements are completed by the same sensor system in step 524: $\Delta P_{AC}(t_1) = P_C(t_1) - P_A(t_1) + \varepsilon(t_1)$. Again this value is placed on top of the register stack in step 525, while the first measurement is shifted down the register stack. And on the third run of the rotation cycle, at a clock

state $t_2 = t_1 + \Delta t$, the field rotator orientation is moved to 120° in step 526, and a new set of measurements are completed, yielding: $\Delta P_{BA}(t_2) = P_A(t_2) - P_B(t_2) + \varepsilon(t_2)$ in step 527. And this value is placed on top of the register stack as well in step 528. At this moment the stack is full. If another value is added in a next cycle, the earliest value, $\Delta P_{CB}(t_0)$, will drop out.

In absence of any drift-induced set-point offset, i.e. $\varepsilon = 0$, and with the sum of the three differential measurements would give a result: $\Sigma P = \Delta P_{CB}(t_0) + \Delta P_{AC}(t_1) + \Delta P_{BA}(t_2) \approx 0$, where the zero measurement is accurate to the noise level in each of the measurements $P_B(t_0), P_C(t_0), ..., P_B(t_2)$, and the level to which subsequent measurements of a beam property yield the same result: $P_C(t_1) \approx P_C(t_0)$, $P_A(t_2) \approx P_A(t_1)$ and $P_B(t_2) \approx P_B(t_0)$. Differential measurements may be based on differential properties such as phase, intensity and/or polarization state of a pair of beams.

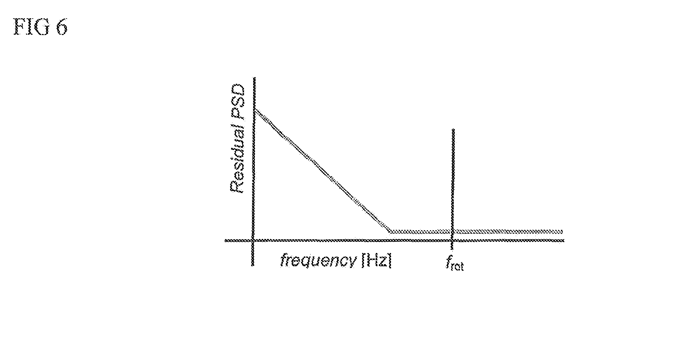

This condition is sketched in Fig. 6 where the power-spectral density (PSD) of the optical properties $P_i(t)$ form a white noise floor, while the PSD of the set-point drift $\varepsilon$ comes up at low frequencies. The rotation frequency of the field rotator $f_{rot} = 1/2 f_{mod} = 1/6 \Delta t$ is chosen such that $\varepsilon$ is practically constant during at least $3 \Delta t$. The assumption of low-frequency set-point drift means that $\varepsilon$ does not change during one rotational cycle of the field rotator, i.e. $\varepsilon(t_0) = \varepsilon(t_1) = \varepsilon(t_2) = \varepsilon$.

In the case of a non-zero set-point drift the sum will not be zero, but equal to $\varepsilon(t_0) + \varepsilon(t_1) + \varepsilon(t_2) = 3\varepsilon$ instead. Thus, the algorithm will compute the drift correction equal to $\Sigma P/3$ in step 529 by reading the last 3 values entered into the register, summing them, divide the result by 3 and correct the last measured differential value: $\Delta P_{BA}(t_2) \rightarrow \Delta P_{BA}(t_2) - \Sigma P/3$ in step 530 . This is the essential self-calibration step. Now, the corrected settings can be sent to the actuators in beams A and B in step 531.

Steps 526 through 531 are now repeated indefinitely and the actual correction cycle has begun: the field rotator is turned over another 60° to 180°, a new measurement on beam pair CB is made, $\Delta P_{CB}(t_3)$ is placed on top of the stack, while the old value, $\Delta P_{CB}(t_0)$, drops out, With the updated sum $\Sigma P' = \Delta P_{AC}(t_1) + \Delta P_{BA}(t_2) + \Delta P_{CB}(t_3)$, a new value for the drift is estimated and the latest measurement is corrected: $\Delta P_{CB}(t_3) \rightarrow \Delta P_{CB}(t_2) - \Sigma P/3$, and the actuator settings for beam B and/or C are updated.

From now on, the self-calibration process can continue, updating simultaneously the differential measurement and the closure sum using the register in a repetition of steps 526 to 531, In this fashion the applied drift correction will be able to adapt itself to slow changes of $\varepsilon$ with time.

The combination of the components of the control loop system 200 as shown in Fig. 2, namely the optical field rotator 210, the stepper motors 217, the registers 214 and the clock 214 together with the means 216 for performing the algorithm as illustrated in Fig 5b allows for the first time to remove, by means of self calibration, low-frequency drifts from control loop systems that require long term stability in the equalization of differential optical properties.

A further aspect of the invention relates to the mechanical stability of the field rotator. In particular, the optical path length between the beam reference and the control loop sensor should not be modified above a level of 0.1 nm in an unpredictable manner by the mechanical rotation of the field rotator assembly and the stepper motor.

Therefore, Fig. 7 shows a schematic description of a preferred embodiment that provides a possible configuration for a kinematic coupling of the field rotator in order to ensure the mechanical stability of the field rotator. A kinematic coupling is to exactly constrain the part in question (see e.g. http://en.wildpedia.org/wiki/kinematic_coupling). The field rotator assembly 210; 710 includes a structure onto which three mirrors 711 are mounted, and which is rotated around one axis 712 and which is configured to be rigid to the same level as all the other optical structures in the interferometer. The rotation of the assembly is decoupled from its operation: For each of the six angles over which the field rotator can be rotated, 0°, 60°,...300°, a kinematic coupling ensures a high precision orientation of the field rotator in three dimensions against the optical references. The kinematic coupling is e.g. formed by three sapphire or ruby balls 705 which drop into a slot 701, a groove 703 and against a flat 702 made of hardened steel or SiC. The rotational mechanism has sufficient slack to allow the assembly to rotate freely when released and to settle firmly on the three slots, e.g. by means of electromagnets (not shown in Fig. 7). Once the assembly is settled and locked into position, this position will be checked by reading out an optical decoder 706 on the outside of both the circular support rings 708, and/or by using dedicated laser-interferometry systems 707.

A further aspect of the invention relates to performing a calibration procedure at the beginning of each long measurement period (typically $10^6$ sec.). During this calibration procedure the relative optical path differences are re-evaluated for each of the six angular positions of the field rotator, and the associated zero-points for the delay-line actuator are re-established. This implies that only during a single run drifts and rms errors on the optical paths should remain below 0.1 nm in the preferred embodiment as shown in Figs. 2 and 8, but from run to run the differences may be larger. Longer term effects are therefore of less concern. The effects of wear and tear of the contact points between the rotating assembly and the optical references are also strongly mitigated by regular recalibration and reduced to the timescale of a single integration run. As shown in Fig. 2, the beam rotator is placed as far upstream as possible. Any permanent misalignments in the assembly will thus be corrected for, once they have been calibrated. The typical dimensions of the assembly are driven by the diameters of the individual beams, which are expected to be 20 - 30 mm in diameter for the preferred embodiment as shown in Fig. 2. The outer dimension of the assembly, as e.g. measured by the distance between the two support rings, is therefore estimated to be 0.3 m. The weight of the rotating part is estimated at a few kg at most. With that mass, it takes a stepper motor only a few ms to rotate the assembly over 60°, and a few 10 ms for the assembly to settle and to let any vibrations damp out. These timescales are small compared to the time it takes to open the control loops, close them again and resume operations (estimated to be of the order of 1 spec.). Integration will typically last for a few 10 to 100 sec. The opening and closing of a shutter is therefore not contingent on any properties of the stepper motor or mechanical properties of the assembly, but fully determined by the surrounding control-loop electronics. The mirrors and structure are assumed to be based on the same material as the surrounding optical bench (presumably SiC or CeSiC), to avoid differential thermal expansion. Additional measures may be taken to avoid thermal gradients with the surrounding optical bench and inside the assembly above the level of mK. Heat dissipation by the stepper motor is assumed to be negligible, due to the low duty cycle and proper thermal engineering. Taking into account the above assumptions, the following requirements, summarized in Table 2, apply to the accuracy with which the rotating assembly is locked into position with respect to the optical bench, after each 60° turn. A shift along the x-axis will not have any impact at all on the optical path length; hence this quantity is considered uncritical.

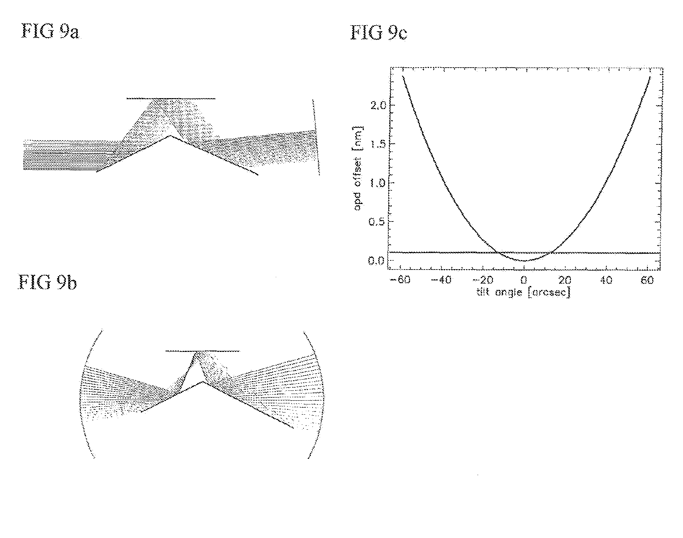

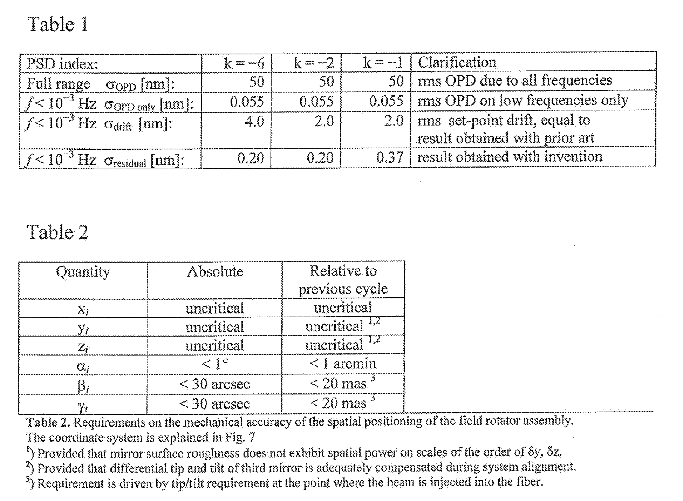

Shifts along the y- or z-axes also leave the optical path length invariant, except when the mirrors are not flat to below 0.1 nm rms on the spatial scale of the shifts. Such blemishes on the mirrors can be detected by comparing optical path differences for pairs of conjugate angles $\alpha_i$, i.e. angles which provide the same pair of beams to the control loop, such as 0° and 180°. Misalignments of the three mirrors of the field rotator will result in a tilted exit beam as shown in Fig. 9a. Once the tilt is properly compensated, the optical path length is unaffected by a vertical shift of the beam rotator. The same holds for a shift along the y-axis. As explained above, there are no requirements on the dynamical wobble of the rotation axis with respect to the x-axis), because the rotating assembly will be locked in position after the rotation is completed. After the rotating assembly is locked in position, the repeatability of the rotation angles $a_i$ around the x-axis, is least critical, as this only affects the alignment of the beams with the control loop sensors, but not the optical path length itself. The requirements in Table 2 are exemplary only and are based on the Darwin mission system requirements to illustrate a practical application of the invention with extremely challenging requirements of accuracy. The most critical requirements concern the repeatability of the alignment of the rotation axis of the field rotator with respect to the optical reference, after the assembly has been locked in position (i.e. the static wobble with respect to the x-axis). Figs. 9b and 9c show how the optical path length is modified by a small tilt of the rotation axis ($\beta$ or $\gamma$ in Fig. 7). In order to maintain errors in the path length below 0.1 nm, the orientation must remain better than ~10 arcsec.

Far more stringent requirements on the repeatability of angles $\beta$ and $\gamma$ derive from the requirements on differential beam tip and tilt at the point of injection into the fiber, which is a source of Optical Path Difference (OPD) in itself. Since the OPD induced by beam tip and tilt during fiber injection is a deterministic process, it is possible to correct the derived OPD for the beam tip and tilt, provided these values can be measured accurately enough.

The accuracy with which the orientation of the rotation axis can be aligned with the optical reference depends on the repeatability of the kinematic coupling. A leading commercial firm, Baltec in Ca., USA, claims to have kinematic coupling tested to a repeatability of a few nm rms in one linear dimension, although some longer-term effects were reported (http://www.precisionballs.com/TDSKin1/Micro_Inch_Positi oning_with_Kincmatic_Componcnts.html). A more conservative statement is made by Prof. Culpepper of MIT's Precision Engineering Research Group, claiming 20 nm rms repeatability (http://pergatory.mit.edu/kinematiccouplings /documents/Presentatio ns/Culpepper/kincouple.htm). If the latter more conservative value is adopted, and a distance of 0.3 m between the two reference rings is assumed, the repeatability of angles $\beta$ and $\gamma$ is $\sqrt{3} \times 20 \cdot 10^{-9}$ / 0.3 rad = 115 nrad = 0.024 arcsec, which is in good agreement with the requirements in Table 2.

Therefore, tip/tilt induced OPD can be compensated for, as long as the angles $\beta$ and $\gamma$ can be measured accurately enough. Optical encoders allow accuracies of typically 50 nm, whereas commercially available dedicated heterodyne interferometer systems obtain sub-nm accuracy (e.g. Zygo: F. Demarest, High-resolution, high-speed, low data age uncertainty, heterodyne displacement measuring interferometer electronics, Meas. Sci. Technol. 9, 1998, 1024-1030).

This level of measurement accuracy also opens the possibility of a second stage of angular fine correction by means of piezo-driven actuators. Commercially available linear translators reach sub-nm translation resolutions (see e.g. http://www.specs.com/products/Nano-Positioning/Linear-Transfer-Device.htm). Hence, after the kinematic coupling has been locked into position, and the angular offsets $\beta$ and $\gamma$ have been established, piezo-driven actuators could compensate the measured offsets with the desired accuracy. Finally, the control loop system according to the invention itself allows an inherent check on the accuracy of the positioning. Each combination of beam pairs can be achieved by two rotation angles of the field rotator, separated by 180°. The two resulting conjugate OPD measurements derive from different sets of kinematic couplings and beams reflecting off different parts of the mirrors. Comparison of the OPD values measured for conjugate settings provides an extra check on the repeatability of the entire system. When the register is extended to contain 6 pair-wise differential measurements, a factor $\sqrt{2}$ on overall performance can be achieved. In conclusion, the preferred embodiment as described above allows for a complete decoupling by use of kinematic coupling of the accurate positioning of the field rotator from the stepper motor action with respect to the optical reference. Proper calibration and alignment of the assembly allow the compensation of static manufacturing imperfections of the invention. Regular follow-up calibration restricts the high-accuracy operation for a duration of the order of $10^6$ sec.,

reducing the problem of long-term effects due to wear and tear. High-accuracy metrology allows the measurement of the critical relative orientation of the rotation axes to milli-arc-second level. Commercially available solutions in the field of accurate positioning provide multiple means to further refine the orientation of the rotational axis. Finally, the invention possesses an inherent redundancy that allows the detection of any remaining optical path differences, and a further improvement of the performance.

The preferred embodiment could be employed both for commercially ground-based high precision interferometry as well as space-based high precision interferometry, in particular nulling interferometry. Clearly, the invention is not restricted to interferometry but can be applied to any system containing three or more channels, which can be permutated among themselves relative to at least one control-loop sensor, and for which (pair-wise) differential properties must be controlled to a zero sum, by a control system in which the set-point may drift.

The operation and effectiveness of the embodiment as described in Fig. 2 for space-based nulling interferometry shall be demonstrated in the following description of numerical simulations. Such numerical simulations have been performed of the problem as it will most likely arise in the context of the Darwin mission. The goal of the simulations is to demonstrate that in a realistic situation, where a reasonable amount of set-point drift is present against a background of co-phasing errors at least as high as currently expected for this mission, the standard control loop cannot achieve the required level of co-phasing with prior art, while it can achieve this level either in absence of the drift, or after application of the above described invention.

In these simulations, the focus was put on the co-phasing of the beams, because this problem has been studied in most detail. Also, as can be found in Lay (2004) the low-frequency instability of the co-phasing has the most impact on the final signal-to-noise ratio, through both the linear and the non-linear second-order term of the instability noise, but it is emphasized that the results can be generalized to the other differential optical properties as well. In this model calculation, an observation of a typical Darwin target, a Solar type G2V star at a distance of 10 pc is simulated. The function of the control loop is to measure the amount, of co-phasing error between the two beams, compute a correction and then apply it by adjusting the setting of the actuator. In order to stimulate this process, it is necessary to have a model of the initial co-phasing errors, and a model of the sensing process. Therefore, an optical system of three optical beams, collected with 3 meter diameter telescopes and a total optical transmission efficiency of 10% (including quantum efficiency of the detectors and acceptance bandwidth of the sensor system) is created, to which co-phasing errors are added, and photon noise. The used wavelength band for the control loop is the visible, centered around 0.5 $\mu$m. In the context of the Darwin mission, the co-phasing errors depend on residual errors resulting from the actions of three layers of coarser control loop systems: one for the spacecraft attitude control, one for the spacecraft relative positioning and one for the fine-pointing tip/tilt control. Page 30 in the excerpts from a Darwin System Assessment progress meeting (Astrium_DARWIN_PM5_handout.pdf) with Atrium clarifies the detailed structure of the control loops. Rather than the details of these loops, the essential piece of information are the power-spectral densities (PSD) on page 32, which provide the shape of the contributions to the input co-phasing noise. An essential feature of this PSD is the steep cut-off towards lower frequencies of the components injected by the previous control-loop layers, and which are the result of predictive controllers, based, f.i. on Kalman filtering, which strongly suppress low-frequency power. The sensor noise, which has a white noise character over the entire bandwidth, is taken into account separately in the model of the fringe-sensing unit (FSU). The PSD of the input co-phasing noise (in the model expressed as an optical path difference, or OPD, in units of nm) used in the model is an outer envelope of the PSD on page 32. For the total power under this envelope, a rather pessimistic assumption of 50 nm rms OPD is made (using Parseval's theorem for the relation between rms perturbation and power spectrum). The optical beams are pair-wise combined and fed into a standard. ABCD FSU as described by Gai et al. (2004) The FSU splits each beam in four parts, which are then interferometrically combined with fixed phase differences of 0, $\pi/2$, n and $3\pi/2$. The four superposed signals are then measured on four single pixels of a detector. The drifts may occur in the optics that produce the fixed phase differences, or in the effective gain of the detector pixels. If the four measured signals are A, B, C and D, then the measured phase difference between the two beams is $\Delta P_{ij}$ = atan[(B-D) / (A-C)]. In the model, the photon noise on each of the individual measurements A, B, C and D is taken into account, and provides the main source of difference between the actual input phase difference, and the measured phase difference.

Concerning the drift $PSD_{in}$ the analysis of the instability noise problem by Astrium (page 28 of Astrium_DARWIN_PM5_handout.pdf), it has been demonstrated that the low-frequency noise problem is strongly dependent on the power-law index k of the PSD P(f) $\propto$ fk (where f is the frequency of the noise) of the OPD perturbations that cause the noise. For small negative values of k, i.e. 0 > k > -0.6, the problem is negligible. For steeper power-spectra, i.e. -0,6 > k > -1, the problem is manageable, and for the steepest spectra, k < -1, the problem becomes unmanageable without additional measures. Finally, the required level of control of the coo-phasing is based on the analysis by Chazelas et al. (2006), however, with the addition that the rms OPD contributing to the variability of the null is computed over a bandwidth of $1/\tau_{int}$ to $10^{-3}$ Hz, with $\tau_{int}$ being the integration time. This upper limit takes into account that the signals are integrated for about 1000 sec. and acquired simultaneously in two chop states on two different science detectors, as described by Lay (2004). Subtraction of these signals removes signal sources which are symmetric with respect to the center of the field of view of the instrument, such as additional stellar light admitted to the science detector as a result of perturbations of the OPD at frequencies above $10^{-3}$ Hz. Figure 9 shows the results of three different numerical simulations of the suppression of the set-point drift, for different values of the power-law index k of the drift PSD $P_{drift}(f) \propto f^k$. The simulations are performed in the time domain, as shown in the right panels, but for clarity the frequency domain is also shown on the left. In the left panels, the dark curve that starts in the lower left corner indicates the PSD of the input OPD, the dark curve that starts in the upper left corner indicates the drift in the OPD sensors, and the light-coloured curve indicates the difference between the measured and the actual OPD, after application of the beam-permutation scheme. The vertical black lines indicate the frequency of beam permutations. On the right, the dark oscillating curve shows OPD drift has been added corresponding to the results obtained with prior art, and the light-coloured curve with only minor oscillations show the residual difference after application of the invention. These results are summarized in Table 1. The main conclusion is that rather serious levels of drift, resulting in excursions beyond 5 nm from the desired set-point, which would degrade the $10^{-5}$ null depth by 50% at 7 $\mu$m and which are not detected by the control loop, can be brought back to sub-nm level as required. Because the difference between the input and measured OPD fluctuations are very small in the absence of the set-point drift (and fully dominated by photon noise), the low-frequency level of set-point drift constitutes the results that would be obtained with prior art.

The reason the invention is not capable of completely removing the set-point drift lies in the fact that there is power in OPD fluctuations on the frequencies associated with the beam permutation. The closure sum is written as a function of time-dependent measurements:

$$\Sigma P(t+2\Delta t) = \Delta P_{CB}(t) + \Delta P_{AC}(t+\Delta t) + \Delta P_{BA}(t+2\Delta t), \text{ where } \Delta t = 1/(3 f_{mod}).$$

This sum is in practice not exactly equal to zero, even in the absence of set-point drift, because the measurements of $P_i$ at different times will differ slightly as a result of photon and read-out noise and remaining power on frequencies around $f_{mod}$. Important to notice here is that the steeper the drift spectrum, and thus the more harmful the perturbations for the science performance, the better the performance of the invention. In particular very low-frequency drift, resulting from the "barbecue-effect" on slowly rotating sun-lit spacecraft, can be strongly suppressed by the proposed invention.

In conclusion, these simulations demonstrate that even for quite pessimistic assumptions about the input OPD perturbations and the level of set-point drift, the invention is capable of rendering the required levels of OPD stability.

It is understood, that the present disclosure has been made only by way of example, and that numerous changes in the details of implementation of the invention may be made without departing from the spirit and scope of the invention as defined in the independent claims.

The skilled person will easily be able to find further combinations and / or sub-combinations of the above described features of the invention in order to adapt the method and the devices to specific circumstances while using the central aspects of the invention at defined in the claims.

**Claims**

1. Method for eliminating low-frequency drifts of the set-point in a control system (200) for a system containing at least three signal channels (201), where said signal channels (201) can be permutated among themselves with respect to at least one control-loop sensor, said control system (200) controls differential properties of the beams in said channels (201), said method including the steps of

   - determining a state of a beam in each channel of at least one pair of channels at a time by use of at least one sensor (212),
   - comparing the determined state of the beams in each channel of at least one pair of channels at a time relative to each other and determining a first correction value by running a control algorithm to achieve a desired set-point, the desired set-point being defined by desired values for the differential properties between the beams in said pair of channels, and
   - correcting the state for the beams in each channel of at least one pair of channels at a time to the desired set-point based on the determined first correction value

   **characterized in that** said method further comprises means for self-calibrating the set-point of the control system to correct low-frequency drifts in the set-point.

2. A method according to claim 1, **characterized in that** the self-calibrating of the set-point comprises the step of permuting the channels so that signals from different combinations of at least one pair of channels are guided to the same sensor (212),

3. A method according to claim 2, wherein said signals of the at least three input channels (201) are electromagnetic beams, and said means for self-calibrating the set-point of the control system to eliminate low-frequency drifts of the set-point further comprises the steps of

- permuting a set of electromagnetic beams by means of an optical field rotator whereby the field rotator (210) is stepping through a series of pre-set angles or states in such a manner that different combinations of beam pairs are delivered to the same sensor.
- storing measurements of the determined states of each beam of at least one pair of channels at a time for at least as many times as there are different permutated beam combinations sent to the step of determining a state of a beam in each channel of at least one pair of channels,
- reading the stored measurements and determining a second correction value where said second correction value removes the effect of low-frequency drifting of the set-point,
- correcting the state for the beams in each channel of the at least one pair of channels to the desired set-point based on the determined second correction value, and
- synchronizing the step of permuting the electromagnetic beams, the step of storing of the measurements and the step of reading and determining the second correction value,

4. Method according to claim 3, **characterized in that** the step of determining a second correction value is based on the principle of zero total sum of the differential properties of a full set of permutated beam pairs.

5. Method according to one of the preceding claims 3 - 4, **characterized in that** before a measurement phase is started, the optical path lengths of the beams for all the angular positions of the field rotator are determined and corrected to achieve the desired values for the difference in optical path length in order to calibrate the system.

6. Method according to one of the preceding claims, wherein the said method is used in an interferometer or nulling interferometer.

7. Apparatus (200) for eliminating low-frequency drifts of the set-point in a control system for a system containing at least three signal channels (201), where said signal channels can be permutated among themselves with respect to at least one control-loop sensor, said control system controls differential properties of said channels, said apparatus (200) comprising a control system with

a. at least one sensor (212) to determine a state of a signal in each channel (201) of at least one pair of channels,
b. means for running a control algorithm for comparing the determined state of the beams in each channel (201) of the at least one pair of channels relative to each other and for determining a first correction value to achieve a desired set-point, the desired set-point being defined by the desired values for the differential properties between the beams in said pair of channels, and
c. a least one actuator (211) to correct the state for each channel (201) to the desired set-point based on said first correction value

**characterized in that** said apparatus further comprises means for self-calibrating the set-point of the control system to correct low-frequency drifts in the set-point.

8. Apparatus according to claim 7, **characterized in that** the apparatus comprises means (210) for permuting the channels (201), located either upstream or downstream from actuator(s) (211), so that signals from different combinations of at least one pair of channels at a time are guided to one control-loop sensor system (212).

9. Apparatus (200) according to claim 8, wherein said beams of the at least three input channels (201) are electromagnetic beams, **characterized in that** the apparatus further comprises

- an optical field rotator (210) to permute a set of incoming electromagnetic beams whereby the field rotator (210) is stepping through a series of preset angles or states in such a manner that different combinations of beam pairs are delivered to the same sensor (230),
- a stepper motor (217) to drive the optical field rotator (210),
- a register or computer memory (214) to store measurements of the determined state in each beam of the at least one pair of channels (201) for at least as many times as there are different permutated beam combinations sent to the step of determining a state of a signal in each channel of at least one pair of channels,
- means for running a low-frequency drift correction algorithm (216) for reading the stored measurement and determining a second correction value wherein said second correction value removes the effect of low-frequency drifting of the set-point,
- a clock (215) for synchronising an action of the stepper motor (217), the register (214), and the means for running a low-frequency drift correction algorithm (216).

10. Apparatus according to claim 9, **characterized in that** the optical assembly (710) of the apparatus that contains the field rotator is fixed in position by means of kinematic coupling.

11. Apparatus according to claim 10, **characterized in that** the apparatus further comprises at least 3 sapphire any / or ruby balls (705) to fix the said optical assembly (710) in position by means of kinematic coupling.

12. Apparatus according to claim 11, **characterized in that** the apparatus further comprises piezo actuators to further adjust the spatial position and orientation of the field rotator.

13. An apparatus according to one of the claims 7-12 where the apparatus is a control system for an interferometer or a nulling interferometer.

**Amended claims in accordance with Rule 137(2) EPC.**

**1.** Method for eliminating low-frequency drifts of the set-point in a control system (200) for a system containing at least three signal channels (201), where said signal channels (201) can be permutated among themselves with respect to at least one control-loop sensor, said control system (200) controls differential properties of the electro-magnetic beams in said channels (201), said method including the steps of

- determining a property of an electro-magnetic beam in each channel of at least one pair of channels at a time by use of at least one sensor (212),
- comparing the determined property of the beams in each channel of at least one pair of channels at a time relative to each other to calculcate the differential properties of said beams and determining a first correction value by running a control algorithm to achieve a desired set-point, the desired set-point being defined by desired values for the differential properties between the beams in said pair of channels, and
- correcting the state for the beams in each channel of at least one pair of channels at a time to the desired set-point based on the determined first correction value

**characterized in that** said method further comprises the steps of

- permuting the channels so that signals from different combinations of at least one pair of channels are guided to the same sensor (212), and
- determining a second correction value to compensate the systematic drift in the set-point on the basis of the principle of zero total sum of the calculated differential properties of a full set of permutated electro-magnetic beam pairs.

**2.** A method according to claim 1, wherein said permuting of channels is realized by means of an optical field rotator whereby the field rotator (210) is stepping through a series of pre-set angles or states in such a manner that different combinations of beam pairs are delivered to the same sensor, and
said method further comprises the steps of

- storing measurements of the determined properties of each beam of at least one pair of channels at a time for at least as many times as different permutated beam combinations are guided to the sensor (212),
- reading the stored measurements for use in said step of determining a second correction value,
- correcting the property for the beams in each channel of the at least one pair of channels to the desired set-point based on the determined second correction value, and
- synchronizing the step of permuting the electromagnetic beams, the step of storing of the measurements and the step of reading and determining the second correction value.

**3.** Method according to one of the preceding claims 1 or 2, wherein before a measurement phase is started, the optical path lengths of the electro-magnetic beams for all the angular positions of the field rotator are determined and corrected to achieve the desired values for the difference in optical path length in order to calibrate the system.

**4.** Method according to one of the preceding claims, wherein the said method is used in an interferometer or nulling interferometer.

**5.** Apparatus (200) for eliminating low-frequency drifts of the set-point in a control system for a system containing at least three signal channels (201), where said signal channels can be permutated among themselves with respect to at least one control-loop sensor, said control system controls differential properties of said channels, said apparatus (200) comprising a control system with

a. at least one sensor (212) to determine a state of a signal in each channel (201) of at least one pair of channels,
b. means for running a control algorithm for comparing the determined property of the electromagnetic beams in each channel (201) of the at least one pair of channels relative to each other and for determining a first correction value to achieve a desired set-point, the desired set-point being defined by the desired values for the differential properties between the beams in said pair of channels, and
c. a least one actuator (211) to correct the property for each channel (201) to the desired set-point based on said first correction value

**characterized in that** said apparatus further comprises means for permuting the channels, located either upstream or downstream from actuator(s) (211), so that signals from different combinations of at least one pair of channels are guided to one control-loop sensor system (212), and means for determining a second correction value to compensate the systematic drift in the set-point on the basis of the principle of zero total sum of the calculated differential properties of a full set of permutated electro-magnetic beam pairs.

**6.** Apparatus (200) according to claim 5, wherein said means for permuting the channels is

- an optical field rotator (210) whereby the field rotator (210) is stepping through a series of preset angles or states in such a manner that different combinations of beam pairs are delivered to the same sensor (230), and wherein the apparatus further comprises a stepper motor (217) to drive the optical field rotator (210),
- a register or computer memory (214) to store measurements of the determined property in each beam of the at least one pair of channels (201) for at least as many times as there are different permutated beam combinations sent to the step of determining a property of a signal in each channel of at least one pair of channels,
- means for running a low-frequency drift correction algorithm (216) for reading the stored measurements and determining a second correction value wherein said second correction value removes the effect of low-frequency drifting of the set-point, and
- a clock (215) for synchronising an action of the stepper motor (217), the register (214), and the means for running a low-frequency drift correction algorithm (216).

**7.** Apparatus according to claims 5 or 6, wherein the optical assembly (710) of the apparatus that contains the field rotator is fixed in position by means of kinematic coupling.

**8.** Apparatus according to claim 7, wherein the apparatus further comprises at least 3 sapphire and / or ruby balls (705) to fix the said optical assembly (710) in position by means of kinematic coupling.

**9.** Apparatus according to claim 8, wherein the apparatus further comprises piezo actuators to further adjust the spatial position and orientation of the field rotator.

**10.** An apparatus according to one of the claims 5-9 where the apparatus is a control system for an interferometer or a nulling interferometer.

## FIG 1

## FIG 2

FIG 3

FIG 4

0 degrees

60 degrees

120 degrees

## FIG 5a

| Permutate set of incoming optical beams | — 510 |

↓

| Detect pair of beams in sensor system | — 511 |

↓

| Measure differential optical property of beam pair | — 512 |

↓

| Store measurements in first-in last-out register | — 513 |

↓

| Compute correction value with low-frequency drift algorithm | — 514 |

↓

| Adjust actuator settings | — 515 |

↓

| Repeat cycle |

## FIG 5b

520 — Set field rotator to 0° at $t_0$

521 — Measure differential optical property $\Delta P_{CB}(t_0)$

522 — Store $\Delta P_{CB}(t_0)$ in register

523 — Increase field rotator by 60° at $t_1=t_0+\Delta t$

524 — Measure differential optical property $\Delta P_{AC}(t_1)$

525 — Store $\Delta P_{AC}(t_1)$ in register

526 — Increase field rotator by 60° at $t_n=t_{n-1}+\Delta t$

527 — Measure new differential optical property, e.g. $\Delta P_{BA}(t_n)$

528 — Shift latest measured property, e.g. $\Delta P_{BA}(t_n)$, into register

529 — Compute drift correction $\Sigma P/3$

530 — Correct last measured value, e.g. $\Delta P_{BA}(t_n) \rightarrow \Delta P_{BA}(t_n) - \Sigma P/3$

531 — Send corrected setting to actuators, e.g. for beams A and B

532 — Repeat cycle for n=3, 4, ....

FIG 6

FIG 7

710

707
laser interferometers

708

z

γ

α

x

701
slot

706
optical
encoder

711

711

705
sapphire or
ruby ball

β

y

702
flat

703
V-groove

optical
references

EP 2 189 751 A1

19

FIG 8

FIG 9a

FIG 9c

FIG 9b

## Table 1

| PSD index: | k = −6 | k = −2 | k = −1 | Clarification |
|---|---|---|---|---|
| Full range $\sigma_{OPD}$ [nm]: | 50 | 50 | 50 | rms OPD due to all frequencies |
| $f < 10^{-3}$ Hz $\sigma_{OPD\ only}$ [nm]: | 0.055 | 0.055 | 0.055 | rms OPD on low frequencies only |
| $f < 10^{-3}$ Hz $\sigma_{drift}$ [nm]: | 4.0 | 2.0 | 2.0 | rms set-point drift, equal to result obtained with prior art |
| $f < 10^{-3}$ Hz $\sigma_{residual}$ [nm]: | 0.20 | 0.20 | 0.37 | result obtained with invention |

## Table 2

| Quantity | Absolute | Relative to previous cycle |
|---|---|---|
| $x_i$ | uncritical | uncritical |
| $y_i$ | uncritical | uncritical [1,2] |
| $z_i$ | uncritical | uncritical [1,2] |
| $\alpha_i$ | < 1° | < 1 arcmin |
| $\beta_i$ | < 30 arcsec | < 20 mas [3] |
| $\gamma_i$ | < 30 arcsec | < 20 mas [3] |

Table 2. Requirements on the mechanical accuracy of the spatial positioning of the field rotator assembly. The coordinate system is explained in Fig. 7

[1]) Provided that mirror surface roughness does not exhibit spatial power on scales of the order of $\delta y$, $\delta z$.

[2]) Provided that differential tip and tilt of third mirror is adequately compensated during system alignment.

[3]) Requirement is driven by tip/tilt requirement at the point where the beam is injected into the fiber.

**Europäisches Patentamt**
**European Patent Office**
**Office européen des brevets**

## EUROPEAN SEARCH REPORT

Application Number

EP 08 16 9727

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | R. FLATSCHER; U. JOHANN; Z. SODNIK: "Nulling Breadboard for DARWIN" INTERFEROMETRY FOR OPTICAL ASTRONOMY II, PROCEEDINGS OF SPIE, vol. 4838, 2003, pages 712-720, XP002514172 DOI:10.1117/12.458156 * abstract * Sections 1 - 7; * figures 1-7 * | 1,7 | INV. G01B9/02 G01B9/06 G05B11/01 H03L7/08 |
| X | M. GAI; S. MENARDI; S. CESARE; B. BAUVIR; D. BONINO; L. CORCIONE; M. DIMMLER; G. MASSONE; F. REYNAUD; A. WALLANDER: "The VLTI fringe sensors: FINITO and PRIMA FSU" NEW FRONTIERS IN STELLAR INTERFEROMETRY, PROCEEDINGS OF SPIE, vol. 5491, 2004, pages 528-539, XP002514173 DOI:10.1117/12.551495 * abstract * Sections 1 - 5; * figure 1 * | 1,7 | |
| A | E. SERABYN: "Nanometer-Level Path-Length Control Scheme for Nulling Interferometry" APPLIED OPTICS, vol. 38, no. 19, 1 July 1999 (1999-07-01), pages 4213-4216, XP002514174 DOI:10.1364/AO.38.004213 * the whole document * | 1-13 | TECHNICAL FIELDS SEARCHED (IPC) G01B G05B H03L |

-/--

The present search report has been drawn up for all claims

| Place of search | Date of completion of the search | Examiner |
|---|---|---|
| Munich | 9 February 2009 | Petelski, Torsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 08 16 9727

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | OLIVER P. LAY: "Systematic Errors in Nulling Interferometers" APPLIED OPTICS, vol. 43, no. 33, 20 November 2004 (2004-11-20), pages 6100-6123, XP002514175 DOI:10.1364/AO.43.006100 Sections, 1, 5, 6; * figures 1,12 * | 1-13 | |
| A | P. GABOR, B. CHAZELAS, F. BRACHET, M. OLLIVIER, M. DECAUDIN, S. JACQUINOD, A. LABÈQUE, AND A. LÉGER: "Stabilising a nulling interferometer using optical path difference dithering" ASTRONOMY & ASTROPHYSICS, vol. 483, no. I, May 2008 (2008-05), pages 365-369, XP002514176 DOI: 10.1051/0004-6361:20077830 * abstract * Sections 1 and 2; | 1-13 | |
| A | DANCHI, W. C.; RAJAGOPAL, J.; KUCHNER, M.; RICHARDSON, L. J.; DEMING, D.: "The Importance of Phase in Nulling Interferometry and a Three-Telescope Closure-Phase Nulling Interferometer Concept" THE ASTROPHYSICAL JOURNAL, vol. 645, 10 July 2006 (2006-07-10), pages 1554-1559, XP002514177 DOI: 10.1086/504511 * abstract * Sections 2 - 4; * figures 1,4 * | 1-13 | TECHNICAL FIELDS SEARCHED (IPC) |

The present search report has been drawn up for all claims

| Place of search | Date of completion of the search | Examiner |
|---|---|---|
| Munich | 9 February 2009 | Petelski, Torsten |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **O.P. Lay.** Systematic errors in nulling interferometers. *Applied Optics,* 2004, vol. 43 (33), 6100-6123
- **B. Chazelas et al.** Instrumental stability requirements for exoplanet detection with a nulling interferometer: variability noise as a central issue. *Applied Optics,* 2006, vol. 45 (5), 984-992

- **Gai et al.** The VLTI Fringe Sensors: FINITO and PRIMA FSU. *Proc, SPIE,* 2004, vol. 5491, 528-539
- Zygo: F. Demarest, High-resolution, high-speed, low data age uncertainty, heterodyne displacement measuring interferometer electronics. *Meas. Sci. Technol.,* 1998, vol. 9, 1024-1030